# EUROPÄISCHE PATENTSCHRIFT

(11) **EP 1 288 465 B1**
(45) Veröffentlichungstag und Bekanntmachung des Hinweises auf die Patenterteilung: **12.12.2007**
(21) Anmeldenummer: 02015315.1
(22) Anmeldetag: 10.07.2002
(51) Int. Cl.: F02B 75/12, F02B 69/00

(54) **Verfahren zum Betreiben einer Kraftstoffeinspritzanlage einer Brennkraftmaschine mit Benzindirekteinspritzung**
Operation method for an injection device of a direct injection combustion engine
Procédé de commande d'un dispositif d'injection pour un moteur à combustion d'injection directe

(30) Priorität: 28.08.2001 DE 10141959
(43) Veröffentlichungstag der Anmeldung: 05.03.2003
(73) Patentinhaber: ROBERT BOSCH GMBH, 70442 Stuttgart (DE)
(72) Erfinder: Pilgram, Guido, 71701 Schwieberdingen (DE); Maier, Martin, 71696 Moeglingen (DE)

(56) Entgegenhaltungen:
- EP-A- 1 046 803
- WO-A-99/42718
- PATENT ABSTRACTS OF JAPAN vol. 2000, no. 12, 3. Januar 2001 (2001-01-03) & JP 2000 265840 A (KUBOTA CORP), 26. September 2000 (2000-09-26)

## Beschreibung

### Stand der Technik

Die Erfindung betrifft ein Verfahren zum Betreiben einer Kraftstoffeinspritzanlage für Brennkraftmaschinen mit Benzindirekteinspritzung, mit einer Kraftstoffhochdruckpumpe, mit einem Steuergerät und mit einem ersten Einspritzventil für jeden Zylinder der Brennkraftmaschine.

Bei Brennkraftmaschinen mit Abgasrückführung und Benzindirekteinspritzung (BDE) tritt das Problem auf, dass sich im Saugrohr bzw. an den Einlassventilen Ablagerungen bilden. Ursächlich für diese Ablagerungen sind der im rückgeführten Abgas enthaltene Rußanteil und der Anteil an teilpolymerisierten Kohlenwasserstoffen im rückgeführten Abgas. Diese Ablagerungen sind anfänglich noch weich und klebrig, wandeln sich aber im Laufe der Zeit in harte Ablagerungen und können zum Blockieren beweglicher Bauteile bzw. deren Zerstörung führen. Im Ansaugtrakt sind vor allem die Einlassventile sowie deren Ventilführungen durch diese Ablagerungen gefährdet.

Außerdem führt das Vorhandensein dieser Ablagerungen zu einer Verringerung des freien Strömungquerschnitts im Ansaugrohr, was sich negativ auf das Betriebsverhalten und die Leistungsabgabe der Brennkraftmaschine auswirkt.

Aus der WO 99/42718 ist eine nach dem PCCI-Verfahren arbeitende Brennkraftmaschine bekannt. Das premixed-charge compression-ignition-(PCCI)-Verfahren ermöglicht die Selbstzündung von Kraftstoff, der im Ansaugtakt oder zu Beginn des Verdichtungstakts ein den Brennraum eingespritzt wurde.

Das Problem von Ablagerungen im Ansaugtrakt, die sich beim BDE-Betrieb mit Abgasrückfürhung ergeben können, wird ebenso wie eine mögliche Lösung dieses Problems in der genannten Druckschrift nicht erwähnt.

Der Erfindung liegt die Aufgabe zugrunde, ein Verfahren zum Betrieb einer Brennkraftmaschinen mit Abgasrückführung und Benzindirekteinspritzung anzugeben, welches die genannten Probleme beim Betrieb einer Brennkraftmaschine mit BDE löst.

Diese Aufgabe wird erfindungsgemäß bei einer solchen Brennkraftmaschine dadurch gelöst, dass bei Bedarf zur Vermeidung von Ablagerungen im Ansaugrohr und/oder am Einlaßventil Kraftstoff durch das zweite Einspritzventil in das Ansaugrohr eingespritzt wird.

### Vorteile der Erfindung

Es hat sich herausgestellt, dass durch zeitweises Einspritzen von Kraftstoff in das Ansaugrohr mittels des zweiten Einspritzventils die Bildung von Ablagerungen verhindert werden kann. Außerdem können eventuell bestehende Ablagerungen abgebaut werden. Diese Effekte beruhen darauf, dass der über das zweite Einspritzventil eingespritzte Kraftstoff im Ansaugrohr in Form eines feinen Kraftstoffnebels vorliegt und die im Kraftstoff enthaltenen Additive durch Benetzung der entsprechenden Oberflächen von Ansaugrohr und bspw. der Einlassventile Bildung von Ablagerungen verhindern. Außerdem löst dieser feine Kraftstoffnebel eventuell vorhandene Ablagerungen von dem Ansaugrohr und/oder den Einlassventilen, so dass auch eventuell vorhandene Ablagerungen wirkungsvoll beseitigt werden können.

In weiterer Ausgestaltung des erfindungsgemäßen Verfahrens kann vorgesehen sein, dass in der Warmlaufphase der Brennkraftmaschine Kraftstoff durch das zweite Einspritzventil in das Ansaugrohr eingespritzt wird, so dass besonders die Bildung von Ablagerungen im Ansaugrohr und an den Einlassventilen verhindert wird und eine eventuell für den Startvorgang erforderliche zusätzliche Kraftstoffmenge eingespritzt wird. Dadurch verursacht das Einspritzen von Kraftstoff durch das zweite Einspritzventil keinen Mehrverbrauch an Kraftstoff.

Alternativ kann auch vorgesehen sein, beim Abstellen der Brennkraftmaschine Kraftstoff über das zweite Einspritzventil in das Ansaugrohr einzuspritzen, um eine lange Verweildauer des Kraftstoffs im Ansaugrohr und auf den Einlassventilen zu erreichen und somit das Auflösen eventuell vorhandener Ablagerungen zu verbessern.

Der Bedarf für eine Einspritzung von Kraftstoff in das Ansaugrohr durch das zweite Einspritzventil kann bspw. durch die Überwachung des Unterdrucks im Ansaugrohr bei bestimmten Betriebszuständen, wie z.B. Leerlauf der Brennkraftmaschine, ermittelt werden, so dass ohne zusätzliche Sensoren das Entstehen von Ablagerungen detektiert werden kann und bei Bedarf eine Einspritzung von Kraftstoff über das zweite Einspritzventil ausgelöst werden kann.

Weitere Vorteile und vorteilhafte Ausgestaltungen der Erfindung sind der nachfolgenden Zeichnung und deren Beschreibung entnehmbar.

### Zeichnung

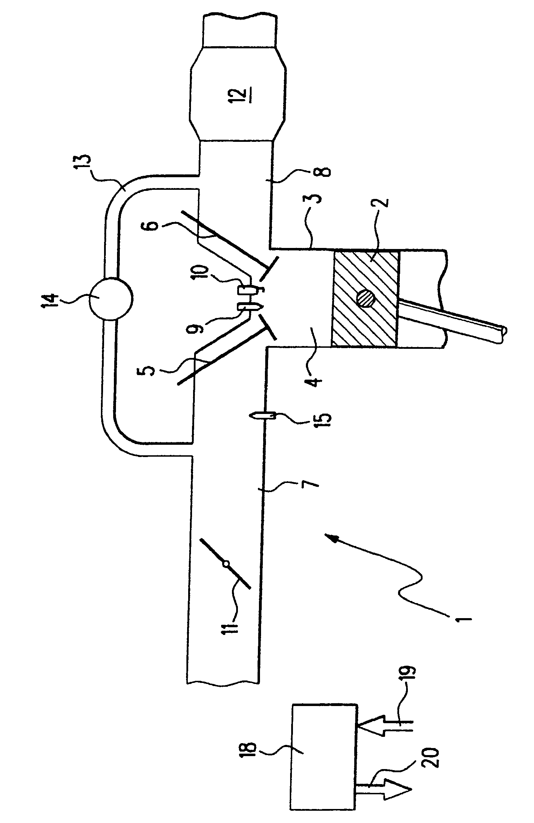

Die einzige Figur zeigt eine vereinfachte Darstellung einer Einzylinderbrennkraftmaschine mit Benzindirekteinspritzung und einem zweiten Einspritzventil im Ansaugrohr.

### Beschreibung des Ausführungsbeispiels

In der Figur ist eine Brennkraftmaschine 1 eines Kraftfahrzeugs mit Benzindirekteinspritzung schematisch dargestellt. Bei dieser Brennkraftmaschine oszilliert ein Kolben 2 in einem Zylinder 3. Der Zylinder 3 ist mit einem Brennraum 4 versehen, der u.a. durch den Kolben 2, ein Einlassventil 5 und ein Auslassventil 6 begrenzt wird. In Strömungsrichtung vor dem Einlassventil 5 ist ein Ansaugrohr 7 vorgesehen. An das Auslassventil 6 schließt ein Abgasrohr 8 an. Selbstverständlich können auch mehrere Einlassventile 5 und mehrere Auslassventile 6 pro Zylinder 3 vorgesehen sein.

Im Bereich des Einlassventils 5 und des Auslassventils 6 ragen ein erstes Einspritzventil 9 und eine Zündkerze 10 in den Brennraum 4 über das erste Einspritzventil 9 kann Kraftstoff direkt in den Brennraum 4 eingespritzt werden. Mit der Zündkerze 10 kann der Kraftstoff im Brennraum entzündet werden. Diese Betriebsart wird als Benzindirekteinspritzung (BDE) bezeichnet. Mit der Zündkerze kann der Kraftstoff im Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. Im Abgasrohr 8 ist ein Katalysator 12 untergebracht, der der Reinigung der durch die Verbrennung des Kraftstoffs entstehenden Abgase (nicht dargestellt) dient.

Von dem Abgasrohr 8 führt ein Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann. Das Abgasrückführrohr 13 und das Abgasrückführventil 14 bilden die sogenannte Abgasrückführung.

In dem Ansaugrohr 7 ist ein zweites Einspritzventil 15 vorgesehen, welches dazu dient bei Bedarf Kraftstoff in das Ansaugrohr 7 einzuspritzen und dadurch die Entstehung von Ablagerungen, welche durch die Abgasrückführung verursacht werden, zu verhindern und eventuell vorhandene Ablagerungen abzubauen. Das zweite Einspritzventil 15 kann als Hochdruck- oder Niederdruck-Einspritzventil ausgeführt werden.

Bei Bedarf kann auch für jeden Zylinder der Brennkraftmaschine ein zweites Einspritzventil vorgesehen werden. Dadurch kann der Kraftstoff unmittelbarer Nähe zu den Einlaßventilen in das Ansaugrohr eingespritzt werden, was die Bildung von Ablagerungen noch wirksamer unterdrückt. Durch diese Maßnahme wird auch die Rückbildung bestehender Ablagerungen intensiviert.

Des Weiteren kann vorgesehen sein, dass das zweite Einspritzventil zwischen der Mündung eines Abgasrückführrohrs in das Ansaugrohr und einem Brennraum der Brennkraftmaschine Kraftstoff in das Ansaugrohr einspritzt, so dass der Kraftstoffnebel bei der Einspritzung von Kraftstoff in das Ansaugrohr dort entsteht, wo auch die Gefahr von Ablagerungen am größten ist.

In weiterer Ergänzung kann vorgesehen sein das zweite Einspritzventil als Hochdruck- oder Niederdruckeinspritzventil auszuführen, so dass die spezifischen Vorteile dieser Bauarten auch bei der erfindungsgemäßen Kraftstoffeinspritzanlage zum Tragen kommen.

Die über das Abgasrückführrohr 13 in das Ansaugrohr 7 rückgeführten Abgase enthalten Rußpartikel und teilpolymerisierte Kohlenwasserstoffe. Diese Bestandteile des Abgases können sich in Form eines zunächst zähflüssigen, klebrigen Belags im Inneren des Ansaugrohrs 7 und auf dem Einlassventil 5 niederschlagen. Aufgrund der hohen Betriebstemperaturen der Brennkraftmaschine wandelt sich dieser Belag in eine harte Ablagerung um, wenn er nicht vorher wieder abgetragen wird. Dazu dient die Einspritzung von Kraftstoff durch das zweite Einspritzventil 15 in das Ansaugrohr 7. Moderne Kraftstoffe enthalten eine Vielzahl von Additiven, wobei manche dieser Additive dazu dienen, das Entstehen dieser Beläge und Ablagerungen zu verhindern. Es hat sich herausgestellt, dass durch kurzzeitiges Einspritzen von Kraftstoff in das Ansaugrohr 7 die Entstehung dieser Ablagerungen verhindert und eventuell vorhandene Ablagerungen rückgebildet werden können.

Es ist möglich die Einspritzung von Kraftstoff durch das zweite Einspritzventil bei jedem Startvorgang der Brennkraftmaschine vorzunehmen. In diesem Fall kann die Einspritzung des Kraftstoffs durch das zweite Einspritzventil 15 gleichzeitig der Gemischanreicherung während der Warmlaufphase dienen, so dass kein zusätzlicher Kraftstoffverbrauch verursacht wird. Es hat sich auch als vorteilhaft herausgestellt, beim Abstellen der Brennkraftmaschine eine kleine Kraftstoffmenge in das Ansaugrohr 7 über das zweite Einspritzventil 15 einzuspritzen, da bei abgeschalteter Brennkraftmaschine der Kraftstoff lange im Ansaugrohr 7 bleibt und somit die Einwirkdauer auf eventuell vorhandene Ablagerungen besonders lang ist. Ebenso ist es möglich die Entstehung und das Vorhandensein von Ablagerungen im Ansaugrohr 7 und am Einlassventil 5 durch ohnehin vorhandene Sensoren zu erkennen und bei Bedarf eine kleine Kraftstoffmenge über das zweite Einspritzventil 15 in das Ansaugrohr 7 einzuspritzen. Es ist z.B. denkbar den Unterdruck im Ansaugrohr bei geschlossener Drosselklappe 11, d.h. im Leerlaufbetrieb der Brennkraftmaschine, zu messen und aus dem Unterdruck Rückschlüsse auf das Vorhandensein von Ablagerungen zu ziehen. Es könnte beispielsweise auch aus dem Verhältnis der angesaugten Luftmasse und dem Unterdruck im Ansaugrohr 7 auf das Vorhandensein von Ablagerungen geschlossen werden. Bei Bedarf kann Kraftstoff über das zweite Einspritzventil 15 in das Ansaugrohr 7 eingespritzt werden.

Gesteuert werden Zündkerze 10, erstes Einspritzventil 9, zweites Einspritzventil 15, Drosselklappe 11 und anderes mehr von einem Steuergät 18. Das Steuergerät 18 tauscht die Eingangssignale 19 und Ausgangssignale 20 beispielsweise über einen Datenbus mit der Kraftstoffeinspritzanlage und den zugehörigen Sensoren und Aktoren (nicht dargestellt) aus.

## Patentansprüche

1. Verfahren zum Betreiben einer Kraftstoffeinspritzanlage einer Brennkraftkraftmaschine mit Benzin-Direkt-Einspritzung, mit einer Kraftstoffhochdruckpumpe, mit einem Steuergerät (18) und mit einem ersten Einspritzventil (9) für jeden Zylinder (3) der Brennkraftmaschine, wobei mindestens ein zweites Einspritzventil (15) vorgesehen ist, und wobei mit dem zweiten Einspritzventil, (15) Kraftstoff in ein Ansaugrohr (7) einspritzbar ist, wobei zur Vermeidung von Ablagerungen im Ansaugrohr (7) und/oder am Einlaßventil (5) bei Bedarf Kraftstoff durch das zweite Einspritzventil (15) in das Ansaugrohr (7) eingespritzt wird.

2. Verfahren nach Anspruch 1, **dadurch gekennzeichnet, dass** in der Warmlaufphase der Brennkraftmaschine Kraftstoff durch das zweite Einspritzventil (15) in das Ansaugrohr (7) eingespritzt wird.

3. Verfahren nach Anspruch 1 oder 2, **dadurch gekennzeichnet, dass** beim Abstellen der Brennkraftmaschine Kraftstoff durch das zweite Einspritzventil (15) in das Ansaugrohr (7) eingespritzt wird.

4. Verfahren nach einem der vorhergehenden Ansprüche, **dadurch gekennzeichnet, dass** der Bedarf zur Einspritzung von Kraftstoff durch das zweite Einspritzventil (15) durch Überwachung des Unterdrucks im Ansaugrohr (7) bei bestimmten Betriebszuständen, wie z. B. Leerlauf der Brennkraftmaschine, ermittelt wird.

5. Steuergerät für eine Kraftstoffeinspritzanlage, **dadurch gekennzeichnet, dass** das Steuergerät (18) Verfahren nach einem der Ansprüche 1 bis 4 durchführt, wenn es eingebaut ist.

6. Computerprogramm, **dadurch gekennzeichnet, dass** das computerprogramm nach einem der Verfahren nach einem der Ansprüche 1 bis 4 arbeitet, wenn es ausgeführt wird.

## Claims

1. Method for operating a fuel injection system of an internal combustion engine having gasoline direct injection, having a high-pressure fuel pump, having a control unit (18) and having a first injection valve (9) for each cylinder (3) of the internal combustion engine, wherein at least one second injection valve (15) is provided, and wherein fuel can be injected into an intake pipe (7) by means of the second injection valve (15), wherein in order to avoid depositions in the intake pipe (7) and/or at the inlet valve (5), fuel is injected through the second injection valve (15) into the intake pipe (7) on demand.

2. Method according to Claim 1, **characterized in that** fuel is injected through the second injection valve (15) into the intake pipe (7) in the warm-running phase of the internal combustion engine.

3. Method according to Claim 1 or 2, **characterized in that** fuel is injected through the second injection valve (15) into the intake pipe (7) when the internal combustion engine is switched off.

4. Method according to one of the preceding claims, **characterized in that** the demand for the injection of fuel through the second injection valve (15) is determined by monitoring the vacuum in the intake pipe (7) in certain operating states, such as for example idle of the internal combustion engine.

5. Control unit for a fuel injection system, **characterized in that** the control unit (18) carries out the method according to one of Claims 1 to 4 when it is installed.

6. Computer program, **characterized in that** the computer program operates according to one of the methods according to one of Claims 1 to 4 when it is executed.

## Revendications

1. Procédé de gestion d'une installation d'injection de carburant d'un moteur à combustion interne à injection directe d'essence comportant une pompe à carburant à haute pression, un appareil de commande 18 et un premier injecteur 9 pour chaque cylindre 3 du moteur à combustion interne,
au moins un second injecteur 15 étant prévu pour injecter du carburant dans la conduite d'admission 7,
et pour éviter les dépôts dans la conduite d'admission 7 et/ou sur la soupape d'admission 5 et, en cas de besoin de carburant, le second injecteur 15 injecte du carburant dans la conduite d'admission 7.

2. Procédé selon la revendication 1,
**caractérisé en ce qu'**
au cours de la phase de chauffage du moteur à combustion interne, le second injecteur 15 injecte du carburant dans la conduite d'admission 7.

3. Procédé selon l'une des revendications 1 ou 2,
**caractérisé en ce que**
lorsqu'on arrête le moteur à combustion interne, du carburant est injecté par le second injecteur 15 dans la conduite d'admission 7.

4. Procédé selon l'une des revendications précédentes,
**caractérisé en ce qu'**
on détermine la demande d'injection de carburant par le second injecteur 15 en surveillant la dépression dans la conduite d'admission 7 pour certains états de fonctionnement tels que par exemple, le fonctionnement à vide du moteur à combustion interne.

5. Appareil de commande d'une installation d'injection de carburant,
**caractérisé en ce que**
l'appareil de commande 18 est conçu pour mettre en oeuvre le procédé selon l'une des revendications 1 à 4, lorsqu'il est installé dans l'appareil de commande.

6. Programme d'ordinateur
**caractérisé en ce que**
ce programme fonctionne selon le procédé de l'une des revendications 1 à 4.
